Europäisches Patentamt

European Patent Office

Office européen des brevets

(11) Numéro de publication: **0 423 042 A1**

# (12) DEMANDE DE BREVET EUROPEEN

(21) Numéro de dépôt: 90420396.5

(22) Date de dépôt: 07.09.90

(51) Int. Cl.⁵: **B62D 47/02**, A61G 3/02, A61H 3/06

(30) Priorité: 10.10.89 ES 8903007 U
20.11.89 ES 8903477 U

(43) Date de publication de la demande:
17.04.91 Bulletin 91/16

(84) Etats contractants désignés:
AT BE CH DE DK FR GB GR IT LI LU NL SE

(71) Demandeur: SOCIEDAD PUBLICA EUSKO
TRENBIDEAK/FERROCARRILES VASCOS, S.A.
( ET/FV, S.A.)
Atxuri, 6
E-48006 Bilbao(ES)

(72) Inventeur: Astorqui, Andres Gabarain
Axturi 6
E-48006 Bilbao(ES)

(74) Mandataire: Dupuis, François
Cabinet Laurent et Charras, 3 Place de
l'Hôtel-de-Ville, BP 203
F-42005 St. Etienne Cédex 1(FR)

(54) Véhicule de transport perfectionné.

(57) Véhicule de transport perfectionné avec, sur une porte (12) au moins, des moyens (13) pour faciliter l'accès des non-voyants ou mal-voyants ; sur une autre porte (12) au moins des moyens (15) pour faciliter l'accès aux handicapés physiques des membres inférieurs et à l'intérieur des moyens (14-16) d'attache, préhension/guidage et appel des utilisateurs présentant de tels handicaps.

Applicables sur des véhicules de transport public, en particulier des autobus, bien qu'on n'écarte pas d'autres véhicules tels que par exemple des trains.

Fig. 1

# VEHICULE DE TRANSPORT PERFECTIONNE

Actuellement, les véhicules utilisés pour les transports publics imposent des limitations aux personnes handicapées, même si ces handicaps n'empêchent pas ceux qui en souffrent de pratiquer des activités pratiquement normales (par exemple, les personnes totalement ou partiellement aveugles et/ou les personnes totalement ou partiellement invalides des membres inférieurs).

Il s'agit de doter les véhicules de transport public (en particulier les autobus bien que ne soient pas écartés les autres véhicules comme, par exemple, les trains) de moyens qui compensent ces handicaps pour que les utilisateurs handicapés puissent utiliser sans problèmes ces véhicules de transport.

A cet effet, les perfectionnements apportés aux véhicules de transport public, conformément à l'invention, comprennent sur les véhicules, qui sont munis de plusieurs portes d'accès:
- sur une des portes, au moins, des moyens pour faciliter l'accès aux non-voyants ou mal-voyants ;
- sur une autre porte, au moins, des moyens pour faciliter l'accès aux handicapés physiques des membres inférieurs ; et
- à l'intérieur des moyens pour l'attache, l'accrochage/le guidage et l'appel des usagers présentant de tels handicaps.

Les modes de mise en pratique de ces perfectionnements (c'est-à-dire la réalisation de la construction de ceux-ci) ne modifient pas, ni ne changent ou altèrent l'essence du modèle.

Le demandeur ne connaît pas l'existence de brevets ou modèles qui puissent être comparés à l'invention ou supposent un état antérieur de la technique à ce sujet. Il n'existe pas actuellement de dispositifs qui, incorporés dans les autobus ou autres moyens de transport, facilitent l'accès des personnes présentant des handicaps physiques, donc les perfectionnements objet de l'invention supposent une avance technique dans ce domaine industriel.

Pour mieux comprendre l'objet de la présente invention, il est représenté sur les plans une forme préférée de réalisation pratique, susceptible de changements annexes qui ne portent pas atteinte à son fondement.

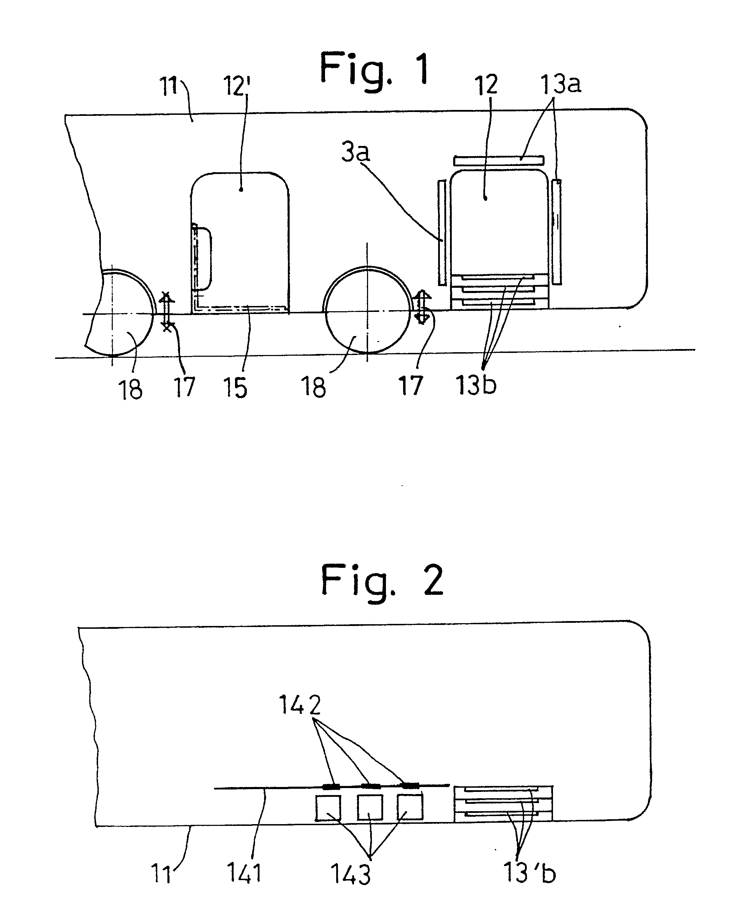

La figure 1 représente une vue partielle schématique en élévation d'un autobus (11) avec les perfectionnements, conformément à l'invention, avec une porte (12) équipée de moyens (13) pour faciliter l'accès aux mal-voyants et une autre porte (12') équipée de moyens (15) pour faciliter l'accès aux handicapés physiques des membres inférieurs.

La figure 2 représente une vue partielle schématique en plan (correspondant à la figure précédente) d'une zone frontale de l'autobus.

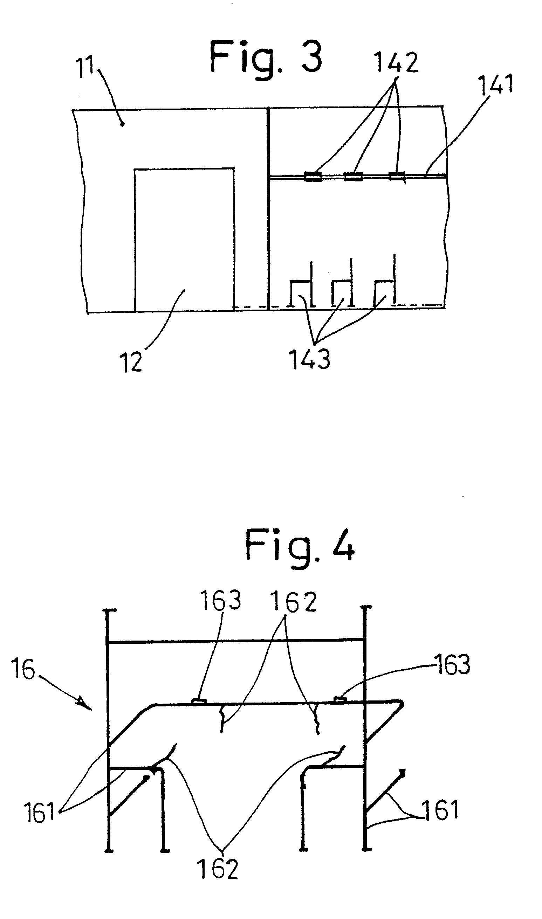

La figure 3 représente une vue partielle schématique en élévation correspondant à la figure 2.

La figure 4 représente une vue schématique des moyens (16) d'attache pour les handicapés des membres inférieurs.

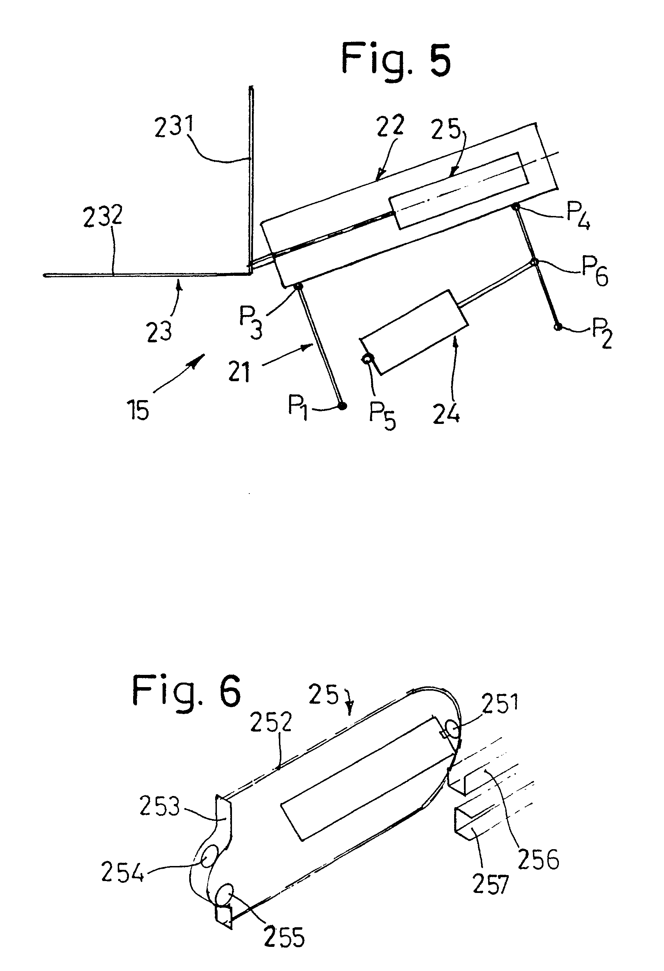

La figure 5 représente, schématiquement, un dispositif pour faciliter l'accès aux autobus de personnes handicapées, conformément à l'invention, cette représentation comprenant:
- le premier châssis (21) - quadrilatère articulé ;
- le châssis mobile (22) ;
- la plateforme (23) ;
- les moyens (vérins) à commande hydraulique (24) (25).

La figure 6 représente, schématiquement, un des mécanismes complémentaires pour le déplacement linéaire du châssis mobile (22) - et plateforme associée (23) - par rapport au premier châssis (21), cette représentation comprenant :
- le vérin de commande hydraulique (25)
- la roue (251) solidaire du vérin (25) ;
- la chaîne (252) ;
- le fer plat (253) ;
- les roues (254), (255) solidaires du fer plat (253);
- les rails de roulement (256), (257).

Les figures 7 et 8 représentent schématiquement, un exemple de réalisation du mécanisme de pliage (26), (27).

On décrit ci-après un exemple de réalisation pratique, non limitative, de la présente invention. On n'écarte absolument aucun autre mode de réalisation dans la mesure ou on n'introduit que des changements annexes qui ne portent pas atteinte à son fondement ; au contraire, la présente invention englobe également toutes ses variantes.

Les perfectionnements préconisés, suivant l'invention, partent d'une structure standard d'autobus (11) avec plusieurs portes d'accès (12), (12') et comportent :

a) au moins sur une des portes (12), des moyens (13) pour faciliter l'accès (tant à l'entrée qu'à la sortie) aux non-voyants ou mal-voyants ;

b) en continuité avec cette porte d'accès (12) et à l'intérieur de l'autobus, des moyens (14) de guidage, préhension et assise pour ces non-voyants ou mal-voyants ;

c) sur une autre porte (12') au moins, des moyens (15) pour faciliter l'accès (tant à l'entrée qu'à la sortie) aux personnes présentant un handicap de quelque type que ce soit des membres inférieurs ;

d) en continuité avec cette porte d'accès (12′) et à l'intérieur de l'autobus, des moyens (16) de guidage, préhension et attache pour les handicapés physiques, présentant des handicaps des membres inférieurs.

Ces moyens (13) pour faciliter l'accès aux non-voyants ou mal-voyants sont, en particulier :
- des bandes (13a) (de couleurs vives et avec beaucoup de contraste avec la couleur de la carrosserie de l'autobus), qui délimitent le contour de la porte (12) ;
- des bandes (13b) - aux mêmes caractéristiques que les bandes (13a) - qui délimitent le contour des escaliers d'accès, à savoir frontalement - des bandes (13b) utiles à la montée - à savoir en plan - des bandes (13b) utiles à la descente.

En particulier, les bandes (13a), (13b) sont de couleur rouge, bien qu'on n'écarte pas d'autres couleurs vives avec beaucoup de contraste.

Les moyens (14) cités sont en particulier :
- une barre de préhension (141) avec plusieurs marques tactiles (142) espacées), chaque marque tactile (142) correspondant à la position d'un siège pour non-voyants (143).

Les moyens (15) pour faciliter l'accès aux personnes handicapées physiques sont en particulier :
- une plateforme (23), élevable et basculable, qui se rentre, repliée, en position de transport et monte/descend, dépliée en se maintenant horizontale pour l'accès de l'utilisateur à (ou de) l'intérieur de l'autobus.

La plateforme (23) atteint deux positions extrêmes : une repliée et une autre de travail, en ayant besoin pour passer de l'une à l'autre d'un mouvement linéaire et d'un mouvement angulaire successifs. A cette dernière position (de travail), la plateforme (23) se déplace, tout en restant horizontale, entre deux positions extrêmes : une au niveau de la rue et l'autre au niveau du plancher de l'autobus, en ayant à cet effet les mécanismes correspondants.

Dans un exemple, non limitatif, de réalisation pratique représenté :
a) la plateforme (23) est structurée en deux parties (231), (232) qui peuvent être disposées adossées ou orthogonales;
b) le mécanisme capable de déplacer la plateforme (23) entre ses positions de travail et de repli est constitué par un vérin à commande hydraulique (25) qui comprend dans sa chemise, une roue (251) sur laquelle appuie/est guidée une chaîne (252). La chaîne (252) est solidaire de la plateforme (23) par l'intermédiaire d'un fer plat (253) porteur à son tours des roues (254) (255) qui se déplacent chacune dans des chemins de roulement (256), (257) disposés sur le châssis mobile (22).

Avec cette structuration, en actionnant le vérin (25) on déplace linéairement la plateforme (23) par rapport au châssis mobile (22) par l'action de la chaîne (252) ;
c) Le mécanisme capable de déplacer la plateforme (23) entre ses positions extrêmes de travail (du niveau de la rue au niveau du plancher de l'autobus, ou vice-versa), est constitué par un vérin à commande hydraulique (24) et une pluralité de points de pivotement $(P_1)$, $(P_2)$, $(P_3)$, $(P_4)$, qui configurent le premier châssis (21) comme un quadrilatère articulé et des points de pivotement complémentaires $(P_5)$, $(P_6)$ entre le vérin (24) et, respectivement le châssis du véhicule et le premier châssis (21).

Avec cette structuration, en actionnant le vérin (24) on déplace angulairement le bâti (21) autour de ses points de pivotement $(P_1)$, $(P_2)$ en déplaçant le châssis mobile (22) et la plateforme (23) associée, en maintenant toujours cette dernière en position horizontale.

La course aussi bien du déplacement linéaire - provoqué par le mécanisme (25) - que du déplacement angulaire - provoqué par le mécanisme (24) - est limitée par des fins de course qui envoient le signal correspondant à une unité centrale.

On décrit ci-après une séquence de fonctionnement du dispositif pour faciliter l'accès aux autobus pour les personnes handicapées suivant l'invention. Les mentions de pièces ou particularités annexes (par exemple, moteurs, bielles, couronnes, vis sans fin, etc ...) ne sont faites qu'a titre explicatif. On n'écarte pas l'utilisation d'autres composants annexes qui sont fonction exclusivement de la solution de construction concrète adoptée dans ce cas.

En partant d'une position de déploiement total (plateforme (23) au niveau du sol) :
- en actionnant la commande, le conducteur lui-même actionne le vérin hydraulique (24) et commence à monter, en faisant pivoter le châssis (21) et en maintenant la plateforme (23) horizontale jusqu'à qu'elle atteigne le niveau du plancher de l'autobus ;
- une fois le vérin (24) plein, le vérin (25) commence se remplir.

Une commande de démarrage commande à une pompe hydraulique de remplir le vérin (25) au corps duquel est fixée la chaîne (252) qui passe par la roue (251) fixée sur l'axe du piston. La sortie de l'axe oblige, par la chaîne (252) au déplacement du fer plat (253) et avec lui des roues (254), (255) qui glissent dans (256), (257), toute la plateforme (23) se déplaçant par rapport au châssis mobile (22).

A la montée de la plateforme (23), un détecteur de position du châssis mobile (22) commande la déconnexion de l'entrée du fluide, ce qui signifie que la demi-partie (232) et la plateforme (23) sont à la hauteur du plancher ou base de l'autobus.

On appuie à nouveau sur la commande de démarrage et la plateforme continue de sortir ainsi que le vérin (25) avec son axe qui bute contre un fin de course, ce qui ouvre le circuit électrique de commande de pliage de la demi-plateforme (232) sur la semi-plateforme (23).

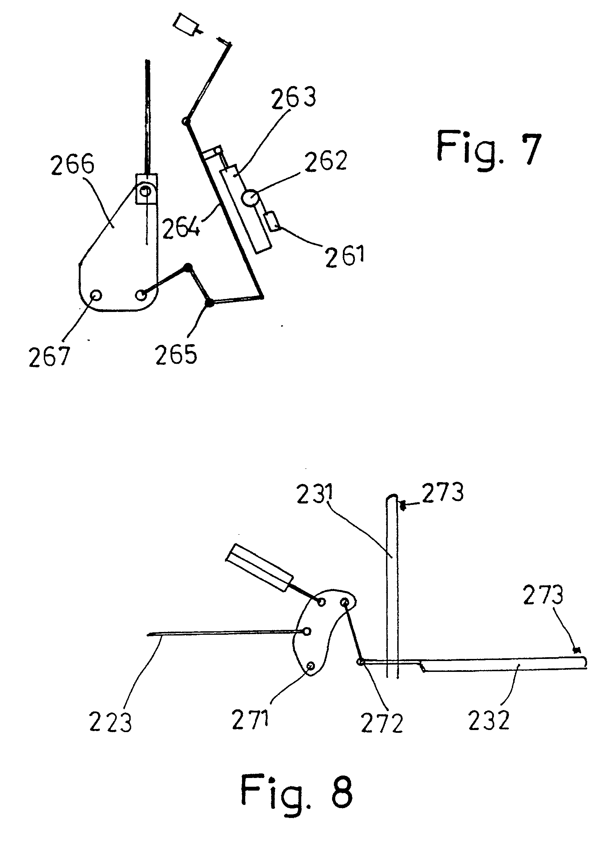

Un mécanisme (26) de pliage, qui comprend un moteur (261), une couronne (262), une vis sans fin (263), une bielle (264) qui oblige une rotule (265) à tourner, et un fer plat (266) qui pivote autour d'un point (267), oblige la plateforme (23) à plier jusqu'à ce que ses demi-parties (231), (232) soient adossées. Schématiquement, un exemple - non limitatif - de réalisation a été représenté à la figure 7.

La vis sans fin (263) continue d'agir et de pousser le fer plat (270) et le fait tourner sur le pivot (271), ainsi la rotule sphérique (272) descend et oblige la plateforme (23) qui porte un fin de course (273) à tourner (plier).

Schématiquement, un exemple - non limitatif - de réalisation a été représenté à la figure 8.

Les moyens (16) pour la préhension et l'attache des handicapés physiques des membres inférieurs, sont constitués à l'intérieur de l'autobus par une structure (161), fixée à la carrosserie de l'autobus et équipée de moyens d'attache (162) - ceintures de sécurité - et boutons-poussoirs de demande d'arrêt (163) qui émettent un son caractéristique (différent du son standard) pour indiquer le cas spécial - descende d'un handicapé - au conducteur, afin de mettre en marche les mécanismes de commande de la plateforme (15).

De plus, l'autobus est complété par un mécanisme de suspension (17) équipé de régulateur (s) qui, situé par rapport à une roue au moins (18), lorsqu'il est actionné abaisse le niveau de l'autobus jusqu'à situer sa (ses) porte(s) d'entrée (12), (12') de telle sorte que leur base soit à une hauteur minimale par rapport au sol.

## Revendications

-1- Véhicule de transport public perfectionné du type équipé de plusieurs portes d'accès (12) (12'), caractérisé en ce qu'il comprend au moins sur une porte (12), des moyens (13) pour faciliter l'accès aux non-voyants ou mal-voyants ; sur une autre porte, au moins, des moyens (15) pour faciliter l'accès aux handicapés physiques des membres inférieurs et à l'intérieur il y a des moyens (14) (16) d'attache, préhension / guidage et appel des utilisateurs présentant ces handicaps.

-2- Véhicule de transport public, suivant la revendication 1, caractérisé en ce que lesdits moyens (13) pour faciliter l'accès aux non-voyants ou mal-voyants sont, sur l'une des portes d'accès (12) :

a) au moins un avertisseur acoustique (16) délimiteur de la porte d'accès ;

b) des bandes (13a) (13b) de délimination aussi bien sur le cadre de la porte que sur les deux faces (montée/descente) des marches, ces bandes ayant des couleurs vives et un fort contraste avec la couleur du reste de l'autobus.

-3- Véhicule de transport public, suivant l'une quelconque des revendications 1 et 2, caractérisé en ce que lesdits moyens (15), pour faciliter l'accès aux handicapés physiques des membres inférieurs sont :

a) sur une des portes (12) un dispositif d'accès avec une plateforme (23) élevable et basculable par rapport au châssis de l'autobus ;

b) sur une des roues (18), au moins, correspondant au côté où se situe la porte avec le dispositif d'accès, un mécanisme de suspension (17) équipé de régulateur (S) qui, convenablement actionné, abaisse le châssis de l'autobus jusqu'à situer sa (ses) porte(s) d'entrée de telle sorte que sa base soit à une hauteur minimale par rapport au sol.

-4- Véhicule de transport public, suivant la revendication 3, caractérisé en ce que le dispositif d'accès comprend :

a) un premier châssis (21) (quadrilatère articulé) capable de pivoter par rapport au châssis de l'autobus, ou par rapport à un châssis portant fixé au châssis de l'autobus ;

b) un châssis mobile (22), capable de se déplacer linéairement par rapport à ce premier châssis ;

c) une plateforme (23) montée sur ce châssis mobile et capable de basculer et de se déplacer linéairement par rapport à celui-ci, en adoptant au moins deux positions extrêmes (d'utilisation et de transport) ;

d) des moyens (24-25) aussi bien pour faire pivoter le premier châssis par rapport au châssis de l'autobus que pour déplacer linéairement le châssis mobile et rabattre la plateforme.

-5- Véhicule de transport public, suivant la revendication 4, caractérisé en ce que les moyens, aussi bien pour faire pivoter le premier châssis (21) que pour déplacer linéairement le châssis mobile (22) et rabattre la plateforme (23) sont des vérins à commande hydraulique (24) (25) qui agissent en coopération avec des mécanismes et limiteurs de course.

-6- Véhicule de transport public, suivant la revendication 5, caractérisé en ce que le mécanisme pour déplacer linéairement la plateforme (23) par rapport au châssis mobile (22) comporte en plus d'un vérin de commande hydraulique (25) une roue (251) solidaire du vérin et qui permet de monter une chaîne (252) solidaire d'un fer plat (253) relié à son tour à la plateforme et porteuse des roues qui se déplacent dans les rails (256) (257) de roulement solidaires du châssis mobile (22).

-7- Véhicule de transport public, suivant la revendication 5, caractérisé en ce que ledit mécanisme pour faire pivoter le premier châssis (21) est constitué par un vérin à commande hydraulique (24), monté sur le châssis de l'autobus, et dont le piston, articulé sur l'un des bras provoque un déplacement angulaire maintenant la plateforme (23) et le châssis mobile parallèles entre eux.

-8- Véhicule de transport public, suivant la revendication 4, caractérisé en ce que la plateforme (23) se structure en, au moins, deux parties (231) (232) capables de s'adosser au pliage, lorsqu'elles sont commandées par un mécanisme complémentaire.

-9- Véhicule de transport public, suivant la revendication 1, caractérisé en ce que lesdits moyens (14) pour la préhension, le guidage des mal-voyants sont, au moins, une barre de préhension (14) qui, partant d'une zone proche de la porte d'accès, comporte des marques tactiles (142), dont la position correspond aux sièges respectifs utilisables par les mal-voyants.

-10- Véhicule de transport public, suivant la revendication 1, caractérisé en ce que lesdits moyens d'attache pour les handicapés des membres inférieurs, comprennent une structure (161) intérieure totalement ou partiellement capitonnée, avec ceintures de sécurité et boutons-poussoirs de demande d'arrêt (163) avec un son caractéristique différent du son standard de l'autobus.

# Fig. 1

# Fig. 2

# Fig. 3

# Fig. 4

# Fig. 5

# Fig. 6

Fig. 7

Fig. 8

# RAPPORT DE RECHERCHE EUROPEENNE

Numéro de la demande

**EP 90 42 0396**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 516 460 (MESSIER) <br> * Revendications; figures * <br> − − − | 1,3-7 | B 62 D <br> 47/02 <br> A 61 G 3/02 |
| X | US-A-4 270 630 (KARKAU) <br> * Revendications; figures * <br> − − − | 1,3-5,7,8 | A 61 H 3/06 |
| X | GB-A-1 551 769 (THE SOUTH YORKSHIRE PASSENGER TRANSPORT) <br> * En entier * <br> − − − | 1,3 | |
| X | FR-A-2 597 801 (SOMAC) <br> * Revendications; figures * <br> − − − | 1,3 | |
| X | EP-A-0 326 129 (NAMCO LTD) <br> * Page 1, colonne de gauche, lignes 29-52; figures * <br> − − − − − | 1,2 | |

|  | DOMAINES TECHNIQUES RECHERCHES (Int. Cl.5) |
|---|---|
|  | B 62 D <br> A 61 G <br> A 61 H <br> B 61 D <br> A 61 F <br> B 60 Q |

Le présent rapport de recherche a été établi pour toutes les revendications

| Lieu de la recherche | Date d'achèvement de la recherche | Examinateur |
|---|---|---|
| La Haye | 12 novembre 90 | PIRIOU J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
............................................................
& : membre de la même famille, document correspondant